# EUROPÄISCHE PATENTSCHRIFT

(11) **EP 1 319 287 B1**
(45) Veröffentlichungstag und Bekanntmachung des Hinweises auf die Patenterteilung: **09.11.2011**
(21) Anmeldenummer: 01978100.4
(22) Anmeldetag: 07.09.2001
(51) Int. Cl.: H04L 12/56

(54) **VERFAHREN ZUM AUFBAU VON VERBINDUNGEN MIT GARANTIERTER DIENSTGÜTE FÜR EIN KOMMUNIKATIONSNETZ MIT EINEM RESOURCENMANAGER**
METHOD FOR SETTING UP CONNECTIONS WITH GUARANTEED QUALITY OF SERVICE FOR A COMMUNICATIONS NETWORK HAVING A RESOURCE MANAGER
PROCEDE POUR ETABLIR DES CONNEXIONS A QUALITE DE SERVICE GARANTI POUR UN RESEAU DE COMMUNICATION COMPORTANT UN GESTIONNAIRE DE RESSOURCES

(30) Priorität: 20.09.2000 DE 10046583
(43) Veröffentlichungstag der Anmeldung: 18.06.2003
(73) Patentinhaber: Siemens Enterprise Communications GmbH & Co. KG, 81379 München (DE)
(72) Erfinder: HIERHOLZER, Peter, 82407 Wielenbach (DE); KLAGHOFER, Karl, 81373 München (DE); MÜLLER, Harald, 82205 Gilching (DE); PREHOFER, Christian, 81477 München (DE)
(74) Vertreter: Fritzsche, Thomas
(86) Internationale Anmeldenummer: PCT/DE2001/003463
(87) Internationale Veröffentlichungsnummer: WO 2002/025876

(56) Entgegenhaltungen:
- EP-A- 1 011 230
- EP-A- 1 018 822
- WO-A-00/08812
- US-A- 6 078 582

## Beschreibung

In vielen paketorientierten Kommunikationsnetzen, wie z.B. im Internet, wird für Verbindungen zwischen Endgeräten dieser Kommunikationsnetze keine Dienstgüte garantiert, wenn keine zusätzlichen Vorkehrungen getroffen werden. Die Dienstgüte einer Verbindung wird häufig auch als _{"}Quality of Service" (QoS) bezeichnet und kann unterschiedliche Übertragungs- und Verbindungsresourcen, wie z.B. die Übertragungsbandbreite, die Übertragungsgeschwindigkeit, die zulässige Fehlerrate und/oder die Übertragungsdauer umfassen.

Bei zeitgemäßen Kommunikationssystemen, die häufig auf solchen paketorientierten Kommunikationsnetzen basieren, sind zur Sicherung einer vorgegebenen Dienstgüte sogenannte Resourcenmanager vorgesehen. Diese sind jeweils einem Kommunikationsnetz oder einem Teilnetz zugeordnet und verwalten dessen jeweilige Übertragungsresourcen. Bei einem Resourcenmanager können für aufzubauende Verbindungen jeweils vorgebbare Übertragungsresourcen verbindungsspezifisch reserviert werden. Nach einer erfolgreichen Reservierung von Übertragungsresourcen überwacht der Resourcenmanager die permanente Verfügbarkeit der reservierten Übertragungsresourcen für die jeweilige Verbindung.

In vielen Fällen sind Verbindungen zwischen unterschiedlichen Teilnetzen eines Kommunikationssystems aufzubauen, wobei die Teilnetze zwar selbst über eine sehr hohe Übertragungsbandbreite verfügen, jedoch durch eine oder mehrere einzelne Übertragungsstrecken mit verhältnismäßig geringer Übertragungsbandbreite gekoppelt sind. Ein typisches Beispiel hierfür sind sogenannte Lokale Netze (LAN: Local Area Network), die über ein öffentliches Telefonnetz gekoppelt sind. Das Telefonnetz mit seiner verhältnismäßig geringen Übertragungsbandbreite stellt in diesem Fall einen Engpass für zwischen den Lokalen Netzen auszutauschende Daten dar.

In EP 1 018 822 A2 ist ein System zum Routen von Datenverkehr auf einem Kommunikationsnetzwerk beschrieben, bei dem eine Vielzahl von Gatekeepern miteinander verbunden ist zur Bildung eines Netzwerks, die Bandbreite steuert und Datenpakete in Richtung von Zieleingabegeräten routet. Neben einem kürzesten Weg zwischen Knoten des Netzwerks sind im System zweitkürzeste Wege bestimmt um eine kontinuierliche Datenübertragung für den Fall zu gewährleisten, dass die kürzesten Wege nicht verfügbar sind. WO 00/08812 offenbart die Zuteilung von Netzwerkressourcen für einen Anruf zwischen einem rufenden und einem gerufenen Teilnehmer, wobei die Netzwerkressourcen für den Anruf aufgrund einer Reservierungsanforderung reserviert werden, bevor die Netzwerkressourcen bestätigt sind. Die Netzwerkressourcen werden bestätigt, wenn der gerufene Teilnehmer den Anruf akzeptiert. In EP 1 011 230 A2 ist ein Netzwerkknoten beschrieben, der einen optimalen Weg für eine neue Verbindung zur Verfügung stellt basierend auf einem Prioritätsstatus der neuen Verbindung. Der Netzwerkknoten arbeitet zusammen mit anderen Netzwerkknoten derart, dass eine oder mehrere eingerichtete Verbindungen, die eine reservierte Bandbreite auf einem Kommunikationsabschnitt auf dem optimalen Weg und einen geringeren Prioritätsstatus als die neue Verbindung aufweisen, umgeleitet werden, wodurch die verfügbare Bandbreite auf dem Kommunikationsabschnitt erhöht wird zur Aufnahme der neuen Verbindung.

Hierbei ergibt sich häufig das Problem, dass die Übertragungsresourcen eines solchen Engpasses in der Regel schon durch eine verhältnismäßig geringe Anzahl von Verbindungen, die einen für ein Teilnetz hoher Übertragungsbandbreite typischen Resourcenbedarf aufweisen, erschöpft werden. Dies führt im Allgemeinen zu einer verhältnismäßig hohen Ablehnungsquote bei über den Engpass zu führenden Verbindungen.

Es ist Aufgabe der vorliegenden Erfindung ein Verfahren für ein paketorientiertes Kommunikationsnetz zum Aufbau von Verbindungen mit garantierter Dienstgüte anzugeben, das eine effiziente Kontrolle von Übertragungsresourcen einzelner Übertragungsstrecken, insbesondere einzelner Übertragungsengpässe, sowie eine Verringerung der Ablehnungsquote von über solche Übertragungsstrecken zu leitenden Verbindungen erlaubt.

Gelöst wird diese Aufgabe durch ein Verfahren mit den Merkmalen des Patentanspruchs 1.

Beim erfindungsgemäßen Verfahren werden Übertragungsresourcen einer Übertragungsstrecke durch einen Resourcenmanager verwaltet. Im Rahmen eines Verbindungsaufbaus ermittelt dieser Resourcenmanager anhand einer Verbindungsinformation, die Ursprung und Ziel der aufzubauenden Verbindung identifiziert, ob die Verbindung über die Übertragungsstrecke geleitet wird. Abhängig vom Ermittlungsergebnis wird anschließend eine Meldung gebildet und zum Ursprung der Verbindung übermittelt. Die Abhängigkeit vom Ermittlungsergebnis kann sich hierbei sowohl auf den Inhalt der Meldung beziehen als auch darauf, ob die Meldung überhaupt erzeugt wird. Am Ursprung der Verbindung ist damit eine Information verfügbar, die davon abhängig ist, ob die aufzubauende Verbindung über die betreffende Übertragungsstrecke geleitet wird. Abhängig von der ü-bermittelten Meldung wird dann am Ursprung der Verbindung eine Auswahl von für die Verbindung zu beanspruchenden Übertragungsresourcen veranlasst.

Auf diese Weise kann der Resourcenbedarf einer aufzubauenden Verbindung abhängig davon, ob diese Verbindung über die Übertragungsstrecke verläuft, an die Übertragungsbedingungen der Übertragungsstrecke angepaßt werden. Damit läßt sich eine Ablehnungsquote von über die Übertragungsstrecke zu leitenden Verbindungen erheblich verringern, indem z.B. anstelle einer sofortigen Ablehnung einer Verbindung, deren ursprünglicher Resourcenbedarf nicht verfügbar ist, zunächst versucht wird, den Resourcenbedarf der Verbindung auf ein zulässiges Maß zu reduzieren. Eine endgültige Ablehnung der Verbindung erfolgt in diesem Fall nur dann, wenn eine solche Reduzierung nicht durchzuführen ist. Auf diese Weise lassen sich die Übertragungsresourcen der Übertragungsstrecke wesentlich besser nutzen.

Im Zusammenhang mit dem erfindungsgemäßen Verfahren seien unter einer Verbindung auch sogenannte virtuelle Verbindungen, Verbindungsbündel, Verbindungspfade oder allgemein Datenströme mit jeweils definiertem Ursprung und Ziel verstanden. In diesem Sinne können als Ursprung und Ziel derartiger Verbindungen beispielsweise Endgeräte, Netzknoten, Vermittlungseinrichtungen, Kommunikationsnetze, Teilnetze oder Subnetze aufgefaßt werden.

Die vom Resourcenmanager verwaltete Dienstgüte einer Verbindung kann ganz unterschiedliche Übertragungsresourcen, wie z.B. Übertragungsbandbreite, Übertragungsgeschwindigkeit, zulässige Fehlerrate, Übertragungsverzögerung und/oder beliebige andere sogenannte Quality-of-Service-Parameter, gegebenenfalls dienst- und/oder prioritätsklassenspezifisch betreffen.

Vorteilhafte Ausführungsformen und Weiterbildung der Erfindung sind in den abhängigen Ansprüchen angegeben.

Nach einer vorteilhaften Ausführungsform der Erfindung kann die Meldung abhängig vom übertragungstechnischen Resourcenumfang der Übertragungsstrecke gebildet werden. Hierbei kann sowohl ein Inhalt der Meldung als auch die Übermittlung der Meldung abhängig vom Resourcenumfang sein.

Nach einer ersten Variante des Verfahrens kann die Meldung abhängig vom jeweils aktuell verfügbaren Resourcenumfang der Übertragungsstrecke, d.h. abhängig von deren aktueller Lastsituation gebildet werden. Diese Variante ist insbesondere für Übertragungsstrecken, die nur von wenigen Anwendern genutzt werden oder die eine veränderliche Bandbreite aufweisen vorteilhaft.

Nach einer zweiten Variante des Verfahrens wird bei der Bildung der Meldung nur der insgesamt verfügbare Resourcenumfang der Übertragungsstrecke berücksichtigt. Die Meldung kann bei dieser Variante z.B. dazu dienen, die zu beanspruchenden Übertragungsresourcen für alle über die Übertragungsstrecke zu führenden Verbindungen unabhängig von temporären Lastschwankungen auf der Übertragungsstrecke zu verringern. Auf diese Weise kann die Anzahl der gleichzeitig über die Übertragungsstrecke aufzubauenden Verbindungen erhöht werden.

Gemäß einer vorteilhaften Weiterbildung der Erfindung können einer oder mehreren bereits bestehenden, über die Übertragungsstrecke führenden Verbindungen abhängig davon, ob eine neu aufzubauende Verbindung über die Übertragungsstrecke geleitet wird, geänderte Übertragungsresourcen zugeteilt werden. So können Übertragungsresourcen einer bestehenden Verbindung reduziert werden, damit eine neu aufzubauende Verbindung, die andernfalls abgelehnt würde, zugelassen werden kann.

Weiterhin kann mit der Verbindungsinformation eine Resourcenanforderung für die aufzubauende Verbindung zum Resourcenmanager übertragen und bei der Bildung der Meldung berücksichtigt werden. Vorzugsweise kann durch den Resourcenmanager die Resourcenanforderung mit dem verfügbaren Resourcenumfang der Übertragungsstrecke verglichen werden und die Meldung abhängig vom Vergleichsergebnis gebildet werden. Beispielsweise können mittels einer entsprechenden Meldung die Übertragungsresourcen der aufzubauenden Verbindung und/oder einer bereits bestehenden Verbindung reduziert werden, falls die Resourcenanforderung den verfügbaren Resourcenumfang der Übertragungsstrecke übersteigt. Darüber hinaus können die Übertragungsresourcen der aufzubauenden und/oder einer bereits bestehenden Verbindung auch schon dann reduziert werden, wenn nach Aufbau der Verbindung gemäß der Resourcenanforderung zu geringe Restübertragungsresourcen für die Übertragungsstrecke verblieben. Allgemein kann eine Änderung der Übertragungsresourcen der aufzubauenden und/oder einer bereits bestehenden Verbindung abhängig von den für die Übertragungsstrecke verbleibenden Restübertragungsresourcen erfolgen.

Gemäß einer weiteren vorteilhaften Weiterbildung der Erfindung kann die Meldung eine vom verfügbaren Resourcenumfang der Übertragungsstrecke abhängige Resourceninformation umfassen, die bei der Auswahl der für die Verbindung zu beanspruchenden Übertragungsresourcen berücksichtigt wird. Die Resourceninformation kann dabei z.B. den aktuell verfügbaren Resourcenumfang der Übertragungsstrecke, eine Vorgabe oder Zuteilung von für die Verbindung zu beanspruchenden Übertragungsresourcen und/oder für die aufzubauende Verbindung maximal verfügbare Übertragungsresourcen angeben.

Die Meldung kann ferner eine Verfahrensinformation über ein für die Verbindung zu verwendendes Übertragungsverfahren umfassen. Eine solche Verfahrensinformation kann beispielsweise ein Datenkomprimierungsverfahren, Kodierungsverfahren und/oder eine Datenkomprimierungsstufe angeben.

Nach einer vorteilhaften Weiterbildung der Erfindung kann z.B. durch den Resourcenmananger oder einen sog. Gatekeeper ermittelt werden, ob und/oder in welchem Umfang am Ursprung der Verbindung eine Auswahl von für die Verbindung zu beanspruchenden Übertragungsresourcen unterstützt wird. Der weitere Verbindungsaufbau und/oder die Bildung der Meldung kann dann abhängig davon erfolgen.

Weiterhin kann zum Resourcenmanager eine Linkinformation übertragen werden, die es erlaubt, die Übertragungsstrecke zu identifizieren. Durch die Übermittlung der Linkinformation wird der Resourcenmanager in die Lage versetzt, auch mehrere jeweils anhand der Linkinformation identifizierbare Übertragungsstrecken separat mittels des erfindungsgemäßen Verfahrens zu verwalten.

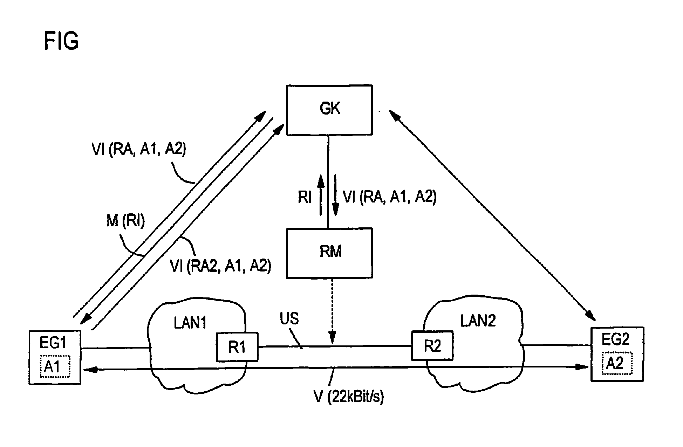

Ein Ausführungsbeispiel der Erfindung wird nachfolgend unter Bezugnahme auf die Figur näher erläutert.

Die Figur zeigt ein Kommunikationssystem mit zwei über eine Übertragungsstrecke gekoppelten Teilnetzen in schematischer Darstellung.

In der Figur ist ein Kommunikationssystem mit zwei paketorientierten, vorzugsweise internetprotokollbasierten Kommunikationsteilnetzen LAN1 und LAN2, die im vorliegenden Ausführungsbeispiel als sogenannte Lokale Netze (LAN: Local Area Network) realisiert sind, schematisch dargestellt. Das Lokale Netz LAN1 verfügt über eine Routereinrichtung R1, die über eine Übertragungsstrecke US mit einer Routereinrichtung R2 des Lokalen Netzes LAN2 verbunden ist. Für das Ausführungsbeispiel sei angenommen, das die Übertragungsstrecke US wesentlich geringere Übertragungsresourcen aufweist als die Lokalen Netze LAN1 und LAN2 und mithin einen Übertragungsengpass für einen Datenaustausch zwischen den Lokalen Netzen LAN1 und LAN2 darstellt. Eine derartige Situation tritt in der Praxis häufig auf, wenn z.B. mehrere an unterschiedlichen Standorten befindliche Lokale Netze einer Firma über ein öffentliche Kommunikationsnetz oder das Internet als Übertragungsstrecken gekoppelt sind. Auf diese Weise gekoppelte Lokale Netze werden häufig auch als _{"}Virtual Private Networks" (VPN) bezeichnet.

Zur Verwaltung von Übertragungsresourcen der Lokalen Netze LAN1 und LAN2 und insbesondere der Übertragungsstrecke US ist ein zentraler Resourcenmanager RM in Kommunikationssystem angeordnet. Der Resourcenmanager RM ist im Kommunikationssystem für die Reservierung von Übertragungsresourcen für aufzubauende Verbindungen sowie für die Sicherstellung der Dienstgüte von aufgebauten Verbindungen zuständig. Die Übertragungsresourcen bzw. die Dienstgüte können dabei ganz unterschiedliche Übertragungsparameter betreffen, wie z.B. eine maximale oder mittlere Übertragungsbandbreite, Übertragungsverzögerung und/oder Übertragungsfehlerrate. Für alle Verbindungen, die eine Dienstgütegarantie im Kommunikationssystem benötigen, müssen die entsprechenden Übertragungsresourcen beim Resourcenmanager RM angefordert und nach Abbau der Verbindung wieder freigegeben werden. Wie vorstehend bereits erwähnt, sind die verfügbaren Übertragungsresourcen der Übertragungsstrecke US wesentlich geringer als die Übertragungsresourcen der Lokalen Netze LAN1 und LAN2. Aus diesem Grund ist für die Kontrolle der Übertragungsresourcen für über die Übertragungsstrecke US verlaufende Verbindungen hauptsächlich der verfügbare Resourcenumfang der Übertragungsstrecke US maßgeblich. Die besondere Kontrolle der Übertragungsresourcen der Übertragungsstrecke US durch den Resourcenmanager RM ist in der Figur durch einen strichlierten Pfeil angedeutet.

Weiterhin ist an das Lokale Netz LAN1 ein Endgerät EG1 und an das Lokale Netz LAN2 ein Endgerät EG2 angekoppelt. Die Endgeräte EG1 und EG2 können dabei als beliebige Kommunikationsendgeräte, z.B. zur Sprach-, Video- und/oder Datenkommunikation, oder auch als Personalcomputer ausgebildet sein. Dem Endgerät EG1 ist eine Adressinformation A1 und dem Endgerät EG2 eine Adressinformation A2 zugeordnet. Über die Adressinformationen A1 und A2 können die Endgeräte EG1 bzw. EG2 im Kommunikationssystem eindeutig adressiert und identifiziert werden. In einer alternativen Ausführungsform der Erfindung können anstelle mindestens eines der Endgeräte EG1 und EG2 beispielsweise auch jeweils eine weitere Routereinrichtung, Vermittlungseinrichtung oder ein weiterer Netzknoten des Kommunikationssystems vorgesehen sein.

Das Kommunikationssystem weist ferner einen zentralen, sogenannten Gatekeeper GK auf, der an den Resourcenmanager RM angekoppelt ist. Der Gatekeeper GK ist für eine logische Steuerung, d.h. für Aufbau und Abbau sowie Überwachung, von Verbindungen im Kommunikationssystem zuständig. Zum Aufbau einer Verbindung mit garantierter Dienstgüte sind dem Gatekeeper GK Ursprung und Ziel der aufzubauenden Verbindung sowie eine Resourcenanforderung zu übermitteln. Im vorliegenden Ausführungsbeispiel genügt der Gatekeeper GK der ITU-T-Empfehlung H.323.

Gemäß einer weiteren Ausführungsform kann anstelle des Gatekeepers GK auch ein das sogenannte SIP-Protokoll (SIP: Session Initiation Protocol) nach IETF-Standard unterstützender SIP-Server eingesetzt sein.

Im vorliegenden Ausführungsbeispiel wird ein erfindungsgemäßer Aufbau einer Verbindung V, z.B. zur Sprachübertragung (VoIP: Voice over Internet Protocol), mit garantierter Dienstgüte vom Endgerät EG1 zum Endgerät EG2 betrachtet. Im Rahmen des Verbindungsaufbaus wird eine Verbindungsaufbau-Signalisierung zwischen dem Endgerät EG1 und dem Gatekeeper GK sowie zwischen dem Gatekeeper GK und dem Endgerät EG2 durchgeführt. Zu diesem Zweck werden zwischen dem Endgerät EG1 und dem Gatekeeper GK sowie zwischen dem Gatekeeper GK und dem Endgerät EG2 logische Signalisierungskanäle eingerichtet, die in der Figur mittels durchgezogener Pfeile veranschaulicht sind. Die Verbindungsaufbau-Signalisierung erfolgt vorzugsweise gemäß der ITU-T-Empfehlung H.323.v2. Diese Art der Verbindungsaufbau-Signalisierung wird häufig auch als "fast connect" bezeichnet.

Im Rahmen der Initiierung des Verbindungsaufbaus wird vom Endgerät EG1 eine Verbindungsinformation VI zum Gatekeeper GK übermittelt. Die Verbindungsinformation VI beinhaltet die den Verbindungsursprung EG1 identifizierende Adressinformation A1, die das Verbindungsziel EG2 identifizierende Adressinformation A2 sowie eine Resourcenanforderung RA. Die Verbindungsinformation VI wird vom Gatekeeper GK anschließend zum Resourcenmanager RM übermittelt. Für das vorliegende Ausführungsbeispiel sei angenommen, dass mit der Resourcenanforderung RA eine Sprachverbindung gemäß der ITU-T-Empfehlung G.711 mit einer Übertragungsbandbreite von 80 kbit/s angefordert wird.

Nach einer alternativen Ausführungsform des Verbindungsaufbaus kann die Verbindungsinformation VI eine das Verbindungsziel EG2 identifizierende, logische Zieladresse (nicht dargestellt), wie z.B. eine Alias-Adresse, E-Mail-Adresse, URL (U-niform Resource Locator) oder E.164-Adresse, enthalten. Diese logische Zieladresse wird durch den Gatekeeper GK in eine das Verbindungsziel EG2 identifizierende Transportadresse, hier A2, umgesetzt und als solche zum Resourcenmanager RM übertragen. Als Transportadresse wird in diesem Zusammenhang eine Adressinformation bezeichnet, anhand der Datenpakete durch das Kommunikationssystem gelenkt werden können. Eine solche Transportadresse kann beispielsweise durch eine IP-Adresse (IP: Internet Protocol) und eine Portnummer gebildet sein.

Anhand der übermittelten Adressinformationen A1 und A2 stellt der Resourcenmanager RM fest, ob die aufzubauende Verbindung V über die Übertragungsstrecke US zu leiten ist. Falls vom Resourcenmanager RM die Übertragungsresourcen mehrerer Übertragungsstrecken zu verwalten sind, ermittelt der Resourcenmanager RM, über welche dieser Übertragungsstrecken die Verbindung V zu führen ist. Dies kann vorzugsweise mittels einer Tabelle (nicht dargestellt) erfolgen, in der jeweils einer Ursprungs- und Zieladresse einer jeweiligen Verbindung eine oder mehrere einzelne Übertragungsstrecken zugeordnet sind, über die diese Verbindung zu führen ist.

Falls durch den Resourcenmanager RM festgestellt wird, dass die aufzubauende Verbindung V über die Übertragungsstrecke US geleitet wird, werden die aktuell verfügbaren Übertragungsresourcen dieser Übertragungsstrecke US ermittelt. Dies kann z.B. anhand einer weiteren Tabelle (nicht dargestellt) erfolgen, in der für eine oder mehrere einzelne Übertragungsstrecken des Kommunikationssystems jeweils deren aktuell verfügbare Übertragungsresourcen - gegebenenfalls dienst- und/oder prioritätsklassenspezifisch - eingetragen sind. Für das vorliegende Ausführungsbeispiel sei angenommen, dass auf diese Weise für die Übertragungsstrecke US eine noch verfügbare Übertragungsbandbreite von 50 kbit/s ermittelt wird. Die ermittelte Übertragungsbandbreite wird anschließend mit der durch die Resourcenanforderung RA beanspruchten Übertragungsbandbreite von 80 kbit/s verglichen. Sofern sich, wie im vorliegenden Ausführungsbeispiel, die noch verfügbare Übertragungsbandbreite als kleiner erweist als die angeforderte Übertragungsbandbreite, wird vom Resourcenmanager RM eine Resourceninformation RI zum Gatekeeper GK übermittelt. Die Resourceninformation RI gibt dabei den aktuell noch verfügbaren Resourcenumfang der Übertragungsstrecke US an. Der Gatekeeper GK bildet daraufhin eine die Resourceninformation RI enthaltende Meldung M und übermittelt diese zum Verbindungsursprung, hier dem Endgerät EG1.

Als Verfahrensvariante kann vorgesehen sein, anstelle der Resourceninformation RI über die aktuell verfügbare Bandbreite eine standardisierte Bandbreitenvorgabe, die kleiner oder gleich der aktuell verfügbaren Übertragungsbandbreite ist, mit der Meldung M zu übermitteln. Beispielsweise kann so eine Bandbreitenvorgabe von 22 kbit/s für Verbindungen gemäß der ITU-T-Empfehlung G.723 in der Meldung M übermittelt werden.

Nach einer weiteren Verfahrensvariante kann vorgesehen sein, anstelle der Resourceninformation RI eine Vorgabe für ein zu verwendendes Übertragungsverfahren mit einem Bandbreitenbedarf, der kleiner oder gleich der aktuell verfügbaren Bandbreite ist, mit der Meldung M zu übermitteln. So kann z.B. durch die Meldung M ein Übertragungsverfahren gemäß den ITU-T-Empfehlungen G.723 oder G.712 für die Verbindung V vorgegeben werden.

Nach einer weiteren Verfahrensvariante kann die Bildung der Meldung M auch nur davon abhängig sein, ob die aufzubauende Verbindung V über die Übertragungsstrecke US zu führen ist oder nicht; d.h. insbesondere unabhängig von temporären Schwankungen der Übertragungsresourcen der Übertragungsstrecke US. So kann z.B. immer dann, wenn festgestellt wird, dass die Verbindung V über die Übertragungsstrecke US verläuft, eine Meldung M übermittelt werden, durch die die Übertragungsresourcen der aufzubauenden Verbindung auf einen vorgegebenen festen Resourcenbedarf eingeschränkt werden.

Die Meldung M kann vom Gatekeeper GK auch zum Endgerät EG2 zu analogen Zwecken übermittelt werden.

Falls sich eine Einschränkung der Übertragungsresourcen der aufzubauenden Verbindung auf den noch verfügbaren Resourcenumfang der Übertragungsstrecke US als nicht zweckmäßig erweist, oder falls die nach Aufbau der Verbindung noch verbleibenden Restübertragungsresourcen unvorteilhaft gering wären, können auch die Übertragungsresourcen bereits bestehender, über die Übertragungsstrecke US verlaufender Verbindungen mittels entsprechender Meldungen reduziert werden.

Die Meldung M kann vorzugsweise in Form einer sogenannten RAS-Meldung (Registration, Admission and Status) gemäß der ITU-T-Empfehlung H.323 übermittelt werden. Derartige RAS-Meldungen erlauben unter anderem eine Änderung der Übertragungsbandbreite von Verbindungen.

Durch die Meldung M wird das Endgerät EG1 dazu veranlaßt, die Verbindung V mit einem entsprechend der Resourceninformation RI reduzierten Resourcenbedarf aufzubauen. Das Endgerät EG1 sendet dazu eine Verbindungsinformation VI mit den Ursprungs- und Zieladressinformationen A1 und A2 sowie eine reduzierte Resourcenanforderung RA2 zum Gatekeeper GK. Durch die Resourcenanforderung RA2 werden höchstens die durch die Resourceninformation RI angegebenen, aktuell verfügbaren Übertragungsresourcen der Übertragungsstrecke US beansprucht. Falls ein Verbindungsaufbau mit solcherart reduzierten Übertragungsresourcen nicht durchführbar ist, wird der Verbindungsaufbau beendet. Im vorliegenden Ausführungsbeispiel werden durch die Resourcenanforderung RA2 Übertragungsresourcen für eine Verbindung gemäß G.723-Empfehlung mit einer Übertragungsbandbreite von 22 kbit/s angefordert. Der Gatekeeper GK veranlaßt daraufhin eine Reservierung der durch die Resourcenanforderung RA2 angeforderten und noch verfügbaren Übertragungsresourcen durch den Resourcenmanager RM. Anschließend veranlaßt der Gatekeeper GK durch eine entsprechende Verbindungsaufbausignalisierung einen logischen Aufbau der Verbindung V mit der durch die Resourcenanforderung RA2 angeforderten Übertragungsbandbreite von 22 kbit/s zwischen den Endgeräten EG1 und EG2.

Nach Aufbau der Verbindung können Nutzdaten zwischen den Endgeräten EG1 und EG2 über die lokalen Netze LAN1 und LAN2 mit garantierter Dienstgüte, d.h. hier mit einer garantierten Übertragungsbandbreite von 22 kbit/s, ausgetauscht werden.

Die Übertragungsresourcen der Übertragungsstrecke US können durch den Resourcenmanager RM gegebenenfalls dienstklassenspezifisch, prioritätsklassenspezifisch und/oder übertragungsrichtungsspezifisch verwaltet und kontrolliert werden. Eine einfache Implementierung einer solchen Resourcenverwaltung besteht darin, den Datenverkehr in unterschiedliche Dienst- und/oder Prioritätsklassen einzuteilen und jeder dieser Klassen einen Anteil der verfügbaren Übertragungsresourcen der Übertragungsstrecke US - gegebenenfalls übertragungsrichtungsspezifisch - zuzuordnen. Derartige Datenverkehrsklassen werden häufig auch als DiffServ-Klassen bezeichnet.

Mit der Meldung M können auch Informationen über spezifische Übertragungsbesonderheiten der Übertragungsstrecke US, wie z.B. eine hohe Datenverlustrate (z.B. bei Funkstrecken), eine hohe Übertragungsverzögerung und/oder eine besondere Art der Übertragungskostenabrechnung, übermittelt werden. In Abhängigkeit von derartigen Informationen kann durch das Endgerät EG1 ein Übertragungsverfahren gewählt werden, das für Datenverluste oder Übertragungsverzögerungen weniger empfindlich ist.

Die von der Verbindung V benötigte Übertragungsbandbreite kann in vorgegebenen Grenzen dadurch geändert werden, dass der zeitliche Abstand der im Rahmen der Verbindung V zu übertragenden Datenpakete geändert wird. Durch eine Verlängerung dieser zeitlichen Abstände wird die Übertragungsbandbreite verringert, da aufgrund der damit einhergehenden Vergrößerung der Datenpakete der Anteil der im Kopf der Datenpakete transportierten Steuerdaten am Datenübertragungsaufkommen verringert wird. Allerdings erhöht sich dadurch sowohl die Übertragungsverzögerung als auch die Anfälligkeit gegen Datenpaketverluste. Eine Verkürzung der zeitlichen Abstände der Datenpakete hat entsprechend die jeweils umgekehrten Wirkungen.

## Patentansprüche

1. Verfahren für ein paketorientiertes Kommunikationsnetz (LAN1, LAN2) zum Aufbau von Verbindungen mit garantierter Dienstgüte über eine Übertragungsstrecke (US), bei dem
a) ein übertragungstechnischer Resourcenumfang der Übertragungsstrecke (US) von einem Resourcenmanager (RM) verwaltet wird,
b) zum Aufbau einer Verbindung (V) mit garantierter Dienstgüte eine Ursprung (EG1) und Ziel (EG2) der Verbindung (V) identifizierende Verbindungsinformation (VI) zum Resourcenmanager (RM) übertragen wird,
c) durch den Resourcenmanager (RM) anhand der übertragenen Verbindungsinformation (VI) ermittelt wird, ob die aufzubauende Verbindung (V) über die Übertragungsstrecke (US) zu leiten ist, **dadurch gekennzeichnet, dass**
d) falls die aufzubauende Verbindung (V) über die Übertragungsstrecke (US) zu führen ist , eine Meldung (M) gebildet und zum Ursprung (EG1) der Verbindung (V) übermittelt wird, und
e) am Ursprung (EG1) der Verbindung (V) durch die übermittelte Meldung (M) veranlasst wird, die Verbindung (V) mit reduziertem Resourcenbedarf aufzubauen, falls die Verbindung (V) über die Übertragungsstrecke zu führen ist.

2. Verfahren nach Anspruch 1,
**dadurch gekennzeichnet,**
**dass** die Meldung (M) abhängig vom übertragungstechnischen Resourcenumfang der Übertragungsstrecke (US) gebildet wird.

3. Verfahren nach einem der vorhergehenden Ansprüche,
**dadurch gekennzeichnet,**
**dass** einer bereits bestehenden, über die Übertragungsstrecke (US) verlaufenden Verbindung abhängig vom Ermittlungsergebnis geänderte Übertragungsresourcen zugeteilt werden.

4. Verfahren nach einem der vorhergehenden Ansprüche,
**dadurch gekennzeichnet,**
**dass** mit der Verbindungsinformation (VI) eine Resourcenanforderung (RA) für die aufzubauende Verbindung (V) zum Resourcenmanager (RM) übertragen wird, und
**dass** die Meldung (M) abhängig von der Resourcenanforderung (RA) gebildet wird.

5. Verfahren nach einem der vorhergehenden Ansprüche,
**dadurch gekennzeichnet,**
**dass** die Meldung (M) eine vom verfügbaren Resourcenumfang der Übertragungsstrecke (US) abhängige Resourceninformation (RI) umfaßt, und
**dass** die Auswahl der für die Verbindung (V) zu beanspruchenden Übertragungsresourcen abhängig von der Resourceninformation (RI) erfolgt.

6. Verfahren nach einem der vorhergehenden Ansprüche,
**dadurch gekennzeichnet,**
**dass** die Meldung (M) eine Verfahrensinformation über ein für die Verbindung (V) zu verwendendes Übertragungsverfahren umfaßt, und
**dass** am Ursprung (EG1) der Verbindung (V) abhängig von der Verfahrensinformation eine Auswahl eines für die Verbindung (V) zu verwendenden Übertragungsverfahrens veranlaßt wird.

7. Verfahren nach einem der vorhergehenden Ansprüche,
**dadurch gekennzeichnet,**
**dass** ermittelt wird, ob und/oder in welchem Umfang am Ursprung (EG1) der Verbindung (V) eine Auswahl von für die Verbindung (V) zu beanspruchenden Übertragungsresourcen unterstützt wird, und
**dass** abhängig davon ein weiterer Verbindungsaufbau erfolgt.

8. Verfahren nach einem der vorhergehenden Ansprüche,
**dadurch gekennzeichnet,**
**dass** zum Resourcenmanager (RM) eine die Übertragungsstrecke (US) identifizierende Linkinformation übertragen wird, anhand der ermittelt wird, ob die Verbindung (V) über die Übertragungsstrecke (US) geleitet wird.

9. Verfahren nach einem der vorhergehenden Ansprüche,
**dadurch gekennzeichnet,**
**dass** der Resourcenumfang der Übertragungsstrecke (US) durch den Resourcenmanager (RM) dienst- und/oder prioritätsklassenspezifisch verwaltet wird.

10. Verfahren nach einem der vorhergehenden Ansprüche,
**dadurch gekennzeichnet,**
**dass** zum logischen Aufbau der Verbindung (V) mindestens ein Gatekeeper (GK) vorgesehen ist.

## Claims

1. Method for a packet-oriented communication network (LAN1, LAN2) for setting up connections with a guaranteed quality of service via a transmission link (US), in which
a) a transmission resource level of the transmission link (US) is managed by a resource manager (RM),
b) in order to set up a connection (V) with a guaranteed quality of service an item of connection information (VI) identifying an origin (EG1) and destination (EG2) of the connection (V) is transmitted to the resource manager (RM),
c) based on the transmitted item of connection information (VI) the resource manager (RM) determines whether the connection (V) to be set up is to be routed via the transmission link (US), **characterised in that**
d) if the connection (V) to be set up is to be routed via the transmission link (US), a message (M) is formed and is transmitted to the origin (EG1) of the connection (V), and
e) the sent message (M) serves to initiate at the origin (EG1) of the connection (V) the set-up of the connection (V) with a reduced resource requirement if the connection (V) is to be routed via the transmission link.

2. Method according to claim 1, **characterised in that** the message (M) is formed in a manner dependent on the transmission resource level of the transmission link (US).

3. Method according to one of the preceding claims, **characterised in that** an already existing connection running via the transmission link (US) is allocated transmission resources which are modified in a manner dependent on the result of the determination.

4. Method according to one of the preceding claims, **characterised in that** a resource request (RA) for the connection (V) to be set up is transmitted to the resource manager (RM) with the item of connection information (VI), and **in that** the message (M) is formed in a manner dependent on the resource request (RA).

5. Method according to one of the preceding claims, **characterised in that** the message (M) comprises an item of resource information (RI) depending on the available resource level of the transmission link (US), and **in that** the transmission resources to be claimed for the connection (V) are selected in a manner dependent on the item of resource information (RI).

6. Method according to one of the preceding claims, **characterised in that** the message (M) comprises an item of method information concerning a transmission method to be used for the connection (V), and **in that** the transmission method to be used for the connection (V) is selected at the origin (EG1) of the connection (V) in a manner dependent on the item of method information.

7. Method according to one of the preceding claims, **characterised in that** it is determined whether and/or to what extent a selection of transmission resources to be claimed for the connection (V) is supported at the origin (EG1) of the connection (V), and **in that** a further connection set-up takes place in a manner dependent thereon.

8. Method according to one of the preceding claims, **characterised in that** an item of link information identifying the transmission link (US) is transmitted to the resource manager (RM), on the basis of which it is determined whether the connection (V) will be routed via the transmission link (US).

9. Method according to one of the preceding claims, **characterised in that** the resource level of the transmission link (US) is managed on a service-specific and/or priority class-specific basis by the resource manager (RM).

10. Method according to one of the preceding claims, **characterised in that** at least one gatekeeper (GK) is provided for the logic set-up of the connection (V).

## Revendications

1. Procédé pour un réseau de communication orienté paquets (LAN1, LAN2) permettant d'établir des liaisons ayant une qualité de service garantie sur une voie de transmission (US), dans lequel
a) un volume de ressources techniques de transmission de la voie de transmission (US) est géré par un gestionnaire de ressources (RM),
b) pour établir une liaison (V) ayant une qualité de service garantie, une information de liaison (VI) identifiant une origine (EG1) et une destination (EG2) de la liaison (V) est transmise au gestionnaire de ressources (RM),
c) par le biais du gestionnaire de ressources (RM) à l'aide de l'information de liaison (VI) transmise il est déterminé si la liaison (V) à établir doit être menée par le biais de la voie de transmission (US), **caractérisé en ce que**
d) si la liaison (V) à établir doit être menée par le biais de la voie de transmission (US), un message (M) est formé et communiqué à l'origine (EG1) de la liaison (V), et
e) à l'origine (EG1) de la liaison (V), le message (M) communiqué fait en sorte que la liaison (V) soit établie avec un besoin en ressources réduit si la liaison (V) doit être menée par le biais de la voie de transmission.

2. Procédé selon la revendication 1, **caractérisé en ce que**
le message (M) est formé en fonction du volume de ressources techniques de transmission de la voie de transmission (US).

3. Procédé selon l'une quelconque des revendications précédentes, **caractérisé en ce que**,
en fonction du résultat de la détermination, des ressources de transmission modifiées sont attribuées à une liaison déjà existante, passant par la voie de transmission (US).

4. Procédé selon l'une quelconque des revendications précédentes, **caractérisé**
**en ce qu'**une demande de ressources (RA) pour la liaison à établir (V) est transmise avec l'information de liaison (VI) au gestionnaire de ressources (RM), et
**en ce que** le message (M) est formé en fonction de la demande de ressources (RA).

5. Procédé selon l'une quelconque des revendications précédentes, **caractérisé**
**en ce que** le message (M) comprend une information de ressource (RI) dépendante du volume disponible de ressources de la voie de transmission (US), et
**en ce que** la sélection des ressources de transmission à solliciter pour la liaison (V) est effectuée en fonction de l'information de ressource (RI).

6. Procédé selon l'une quelconque des revendications précédentes, **caractérisé**
**en ce que** le message (M) comporte une information de procédé sur un procédé de transmission à employer pour la liaison (V), et
**en ce que**, à l'origine (EG1) de la liaison (V), une sélection d'un procédé de transmission à employer pour la liaison (V) est déterminée en fonction de l'information de procédé.

7. Procédé selon l'une quelconque des revendications précédentes, **caractérisé**
**en ce qu'**il est déterminé si et/ou avec quel volume une sélection des ressources de transmission à solliciter pour la liaison (V) est supportée à l'origine (EG1) de la liaison (V), et
**en ce qu'**un autre établissement de liaison a lieu en fonction de cette détermination.

8. Procédé selon l'une quelconque des revendications précédentes, **caractérisé**
**en ce qu'**une information de liaison identifiant la voie de transmission (US) est transmise au gestionnaire de ressources (RM), à l'aide de laquelle information il est déterminé si la liaison (V) sera menée par le biais de la voie de transmission (US).

9. Procédé selon l'une quelconque des revendications précédentes, caractésé en ce que
volume de ressources de la voie de transmission (US) est géré par le gestionnaire de ressources (RM) d'une manière spécifique à une classe de service et/ou à une classe de priorité.

10. Procédé selon l'une quelconque des revendications précédentes, **caractérisé**
**en ce qu'**il est prévu au moins un portier (GK) pour l'établissement logique de la liaison (V).
